(19) **Europäisches Patentamt**

**European Patent Office**

**Office européen des brevets**

(11) **EP 0 627 696 B1**

(12) **EUROPEAN PATENT SPECIFICATION**

(45) Date of publication and mention
of the grant of the patent:
**11.04.2001 Bulletin 2001/15**

(51) Int Cl.⁷: **G06T 7/20**

(21) Application number: **94108519.3**

(22) Date of filing: **03.06.1994**

(54) **Image motion vector detection apparatus**

Bildbewegungsvektornachweisgerät

Appareil de détection de vecteurs de mouvement d'image

(84) Designated Contracting States:
**DE FR GB NL**

(30) Priority: **03.06.1993 JP 13347693**

(43) Date of publication of application:
**07.12.1994 Bulletin 1994/49**

(73) Proprietor: **MATSUSHITA ELECTRIC INDUSTRIAL CO., LTD.**
**Kadoma-shi, Osaka-fu 571-8501 (JP)**

(72) Inventors:
• **Nishio, Toshiroh**
  **Hirakata-shi, Osaka (JP)**
• **Kubota, Masashi**
  **Kobe-shi, Hyogo (JP)**
• **Nakai, Seiji**
  **Osaka-shi, Osaka (JP)**
• **Suzuki, Hidekazu**
  **Yamatokoriyama-shi, Nara (JP)**
• **Setoh, Koji**
  **Moriguchi-shi, Osaka (JP)**

(74) Representative: **Eisenführ, Speiser & Partner**
**Martinistrasse 24**
**28195 Bremen (DE)**

(56) References cited:
**EP-A- 0 348 207        EP-A- 0 368 747**

**Description**

**BACKGROUND OF THE INVENTION**

**1. Field of the invention**

The present invention relates to a motion vector detecting method in image signal processing.

**2. Description of the prior art**

Methods for detecting the amount of displacement in an image screen by comparing the current frame with the previous frame on a frequency area basis have been proposed as a means of applying signal processing appropriate to specific image properties in the field of image signal processing technologies, and particularly signal processing technologies applied to moving images (see "Digital signal processing of images, revised and enlarged version," Fukinuke Takahiko, Nikkan Kogyo Shimbunsha, pp. 223-224).

This conventional method of motion vector detection whereby images are compared in a specific frequency area to detect the amount of displacement in an image is described below.

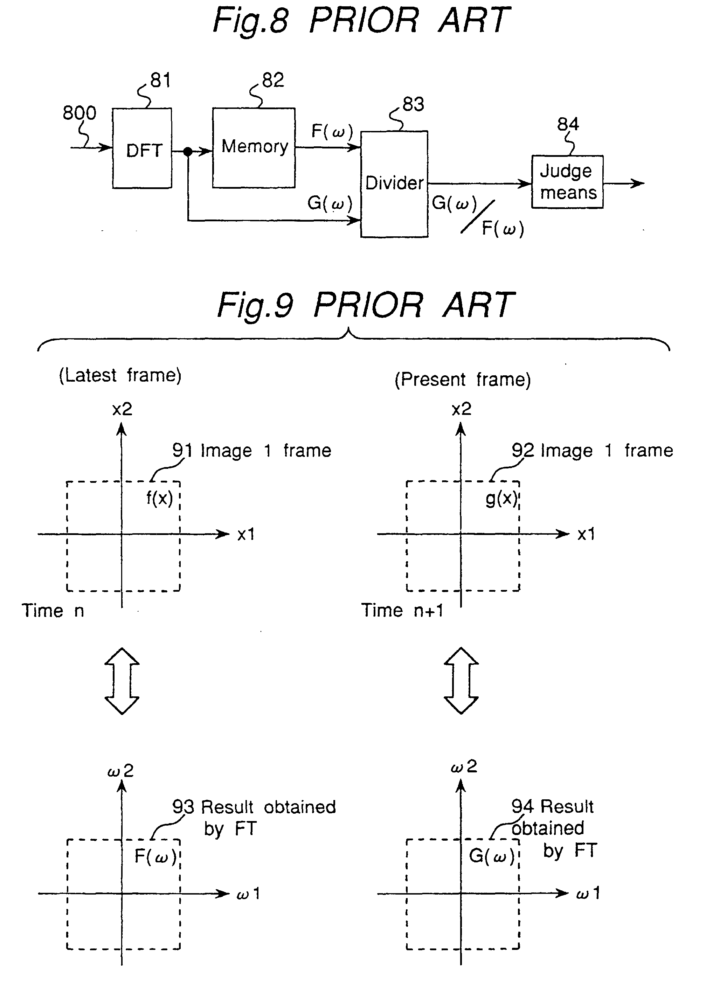

Fig. 8 is a block diagram of a conventional apparatus detecting motion vectors in a frequency area. Referring to Fig. 8, a discrete Fourier transform means 81 applies a discrete Fourier transformation to an input video signal 800. A memory 82 stores one frame of data. A divider 83 takes as inputs the outputs from the discrete Fourier transform means 81 and the memory 82, and divides the values for each sampling point. A judge circuit 84 takes the output of the divider 83 as its input, and determines the presence of a motion vector in the divider 83 output; if a motion vector is present, the judge circuit 84 then determines the magnitude and direction of the vector.

The motion vector detection apparatus thus comprised operates as follows. Fig. 9 is used to describe motion vector detection apparatus operation. Referring to Fig. 9, the signal level of the input image signal at position x in one image frame 91 at time n is expressed as f(x) where x is a two-dimensional vector expressed as x = (x1, x2). Image frame 92 is the frame at time (n+1). The difference between n and (n+1) expresses the time interval of one frame to the next frame. The signal level of the image at time (n+1) at position x is expressed as g(x). A Fourier transform result 93 is obtained by the discrete Fourier transform means 81 applying a discrete Fourier transformation to one image frame 91 at time n. If the Fourier transform result is expressed as F($\omega$), the Fourier transform equation is defined by equation 1.

$$F(\omega) = \int f(x)e^{-j\omega x} \, dx \qquad [1]$$

Note that equation 1 is the definition when x is a continuous variable. While x is a discrete value in a digital system, the characteristics of the equation is essentially the same whether x is a continuous or discrete variable, and x is therefore treated as a continuous variable for simplicity. Because the output signal also becomes a discrete value when the input signal is Fourier transformed (depending on the discrete Fourier transform method), $\omega$ in equation 1 is also a discrete variable, but can be similarly treated as a continuous variable for the reasons described above. If the image signal at time (n+1) is expressed as g(x), the Fourier transform output G($\omega$) is expressed by equation 2 similarly to equation 1.

$$G(\omega) = \int g(x)e^{-j\omega x} \, dx \qquad [2]$$

In the following discussion, the one image frame 91 at time n is referred to as the "previous frame," and the one image frame 92 at time (n+1) as the "current frame." The output of the memory 82 (Fig. 8) expresses the Fourier transform result 93 (Fig. 9), i.e., F($\omega$), with the previous frame, and the output of the discrete Fourier transform means 81 expresses the Fourier transform result 94 with the current frame, i.e., G($\omega$).

Operation is described below. First, the discrete Fourier transform means 81 (Fig. 8) Fourier transforms the input video signal 800 to obtain the data of the frequency area. The input video signal 800 converted to frequency area data is then input to the memory 82, which stores one screen of data. As a result, the output from memory 82 is the data for the one frame preceding the signal input to the memory 82. The discrete Fourier transform output of the current frame (time n+1) is thus equivalent to G($\omega$), and the output from the memory 82 is equivalent to the discrete Fourier transform output F($\omega$) of the previous frame (time n). The divider 83 then divides the output of the memory 82 by the output of the discrete Fourier transform means 81, and outputs the quotient G($\omega$)/F($\omega$).

If g(x) is assumed to be expressed as the horizontal displacement of the input video signal f(x) of the previous frame, namely

$$g(x) = f(x-a) \qquad [3],$$

the Fourier transform output G($\omega$) can be expressed using F($\omega$) as shown in equation 4.

$$G(\omega) = \int f(x-a)e^{-j\omega x}\, dx = e^{-j\omega a} \cdot \int f(x-a)e^{-j\omega(x-a)}\, dx = e^{-j\omega a} \cdot F(\omega) \qquad [4]$$

As a result, the divider output G($\omega$)/F($\omega$) is defined as shown in equation 5, and can be expressed as a simple exponential function. Note, however, that a is a two-dimensional vector in a real area (x plane).

$$G(\omega)/F(\omega) = e^{-j\omega a} \qquad [5]$$

The judge circuit 84 detects motion vector a based on this information. Specifically, the judge circuit 84 calculates the motion vector based on the output from divider 83, and determines this to be the motion vector between the previous frame 91 and the current frame 92. The judge circuit 84 calculates the motion vectors as described below, for example.

Specifically, if the inverse discrete Fourier transform of the output of the divider 83 is expressed an evaluation function as e(x) (equation 6), a single peak will appear at the position x = a on plane x as the result of the inverse discrete Fourier transformation.

$$e(x) = \int G(\omega)/F(\omega)e^{+j\omega x}d\omega = \int e^{+j\omega(x-a)}d\omega = \delta(x-a) \qquad [6]$$

Parameter a expressing the position at which this peak appears can be nothing other the amount of parallel displacement assumed in equation 3. Thus, the motion vector quantity is expressed by the distance (magnitude) and direction from the origin to point a. This is how the judge circuit 84 detects motion vectors.

The problem with this method is that while the discrete Fourier transform can be computed by high speed conversion methods, it still requires an extremely large number of operations. In addition, the motion vector also contains amplitude and cannot be completely expressed by a simple exponential function as shown in equation 4. As a result, applying an inverse Fourier transform will theoretically not yield a single peak. European Patent Application 0 368 747 A1 discloses a motion vector detection apparatus to estimate the motion of at least one target in a sequence of images, where the motion of that target and the motion of the background of the images can be described by translations, which apparatus comprises a sampling means to sample every picture (according to an embodiment, subsampling is preferred), a discrete Fourier transform means to calculate, for every sampled image, a coefficient matrix, a storage means to store to a coefficient matrix corresponding to the preceeding image, a means to calculate a socalled phase correlation matrix whose elements are equal to the product of the coefficient of the actual image and the complex conjugate of a coefficient of the preceeding image, divided by the module of this product, a means to calculate an inverse transformation matrix of the phase correlation matrix by application of an inverse Fourier transformation on the phase correlation matrix, an evaluation means to determine such coefficients of the inverse transformation matrix that are larger than a threshold value; the largest value corresponds to the motion of the image background and the lesser ones to contingent targets.

SUMMARY OF THE INVENTION

The object of the invention is to provide a motion vector detection apparatus whereby motion vectors can be calculated with good precision using few calculations, and an output of a wrong evaluation result is avoided.

To achieve this object, the motion vector detection apparatus of the invention comprises a subsampling means for time-base sampling an input video signal, a discrete Fourier transform means for Fourier transforming subsampled data, a storage means for temporarily storing Fourier transformed data, a divider for dividing the data Fourier transformed by the discrete Fourier transform means and the data temporarily stored by the storage means, an inverse discrete Fourier transform means for inverse Fourier transforming the divider output, a first evaluation means for detecting a motion vector from the output of the inverse discrete Fourier transform means, an absolute value calculation means for calculating an absolute value of the divider output, and a second evaluation means for detecting a motion vector from an output of the absolute value calculation means and an output of the inverse discrete Fourier transform means.

In this configuration, the subsampling means time-base samples the input video signal, the discrete Fourier transform means discrete Fourier transforms the subsampled data to convert the real area to frequency area data. The data for these frequency areas in the previous and current frames is then divided by the divider by retrieving the discrete Fourier transform output obtained from the previous frame from the storage means to divide the previous frame data with the discrete Fourier transform output for the current frame. An inverse Fourier transformation is then applied by the inverse discrete Fourier transform means to the divider output, and reflected to the real area. The output of this inverse discrete Fourier transform means contains the motion vector information of the current frame as seen from the previous frame. The output of the inverse discrete Fourier transform means has a peak at a certain position in the real area equivalent to the motion vector. The first evaluation means monitors this real area data to determine whether the current frame is a moving area relative to the previous frame, and outputs the motion vector when it is determined to be a moving area. The number of sampling points is less than before subsampling because the discrete Fourier transform is applied after subsampling. If subsampling is doubled, the number of sampling points is reduced to 1/4 the number before subsampling. If subsampling is tripled, the number of sampling points is reduced to 1/9. As a result, the number of calculations required during the discrete Fourier transform operation can reduced. The required storage capacity is also reduced, and the number of points calculated by the divider is also reduced. In addition, the number of operations required for the inverse discrete Fourier transform is also reduced.

As a result, a motion vector detection apparatus for obtaining motion vectors with good precision by means of fewer calculations can be provided by expressing the motion vector magnitude as a phase component by dividing the frequency areas of the previous and current frames, applying an inverse Fourier transform by an inverse discrete Fourier transform means, and evaluating the output therefrom by means of a subsampling means for time-base sampling the input video signal, a discrete Fourier transform means for applying a discrete Fourier transform, and a storage means for storing one screen of data output from the discrete Fourier transform means.

## BRIEF DESCRIPTION OF THE DRAWINGS

The present invention will become more fully understood from the detailed description given below and the accompanying diagrams wherein:

Fig. 1 is a block diagram of a motion vector detection apparatus according to the first embodiment of the invention,
Fig. 2 is used to describe the method for calculating the motion vector quantity in the first embodiment of the invention,
Fig. 3A is a 3D explanatory view used to describe the method of obtaining the motion vector quantity by means of a weighing calculation in the first embodiment of the invention,
Fig. 3B is a 2D explanatory view used to describe the method of obtaining the motion vector quantity by means of a weighing calculation in the first embodiment of the invention,
Fig. 4 is another explanatory view used to describe another method of obtaining the motion vector quantity by means of a weighing calculation in the first embodiment of the invention,
Fig. 5 is a block diagram of a motion vector detection apparatus according to the second embodiment of the invention,
Fig. 6 is a block diagram of a motion vector detection apparatus according to the third embodiment of the invention,
Fig. 7 is a block diagram of a motion vector detection apparatus according to the fourth embodiment of the invention,
Fig. 8 is a block diagram of a conventional motion vector detection apparatus, and
Fig. 9 is a view used to describe the operation of a conventional motion vector detection apparatus.

## DESCRIPTION OF PREFERRED EMBODIMENTS

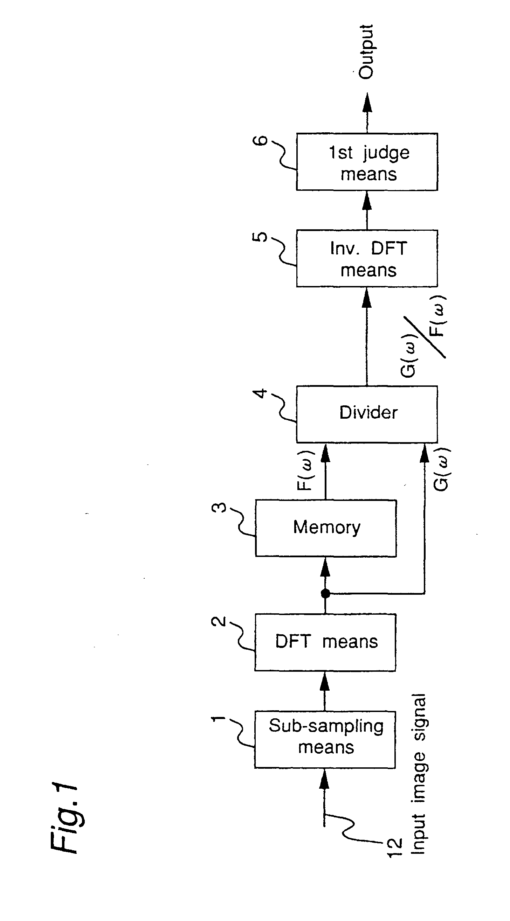

As shown in Fig. 1, a block diagram of a motion vector detection apparatus according to the first embodiment of the invention, this motion vector detection apparatus comprises a subsampling circuit 1, a discrete Fourier transform circuit 2, a memory 3 storing the output of the discrete Fourier transform circuit 2, a divider 4, an inverse discrete Fourier transform circuit 5, and a first evaluation circuit 6 for detecting motion vectors from the output of the inverse discrete Fourier transform circuit 5.

The motion vector detection apparatus of the first embodiment thus comprised is described below. As shown in Fig. 1, the input video signal 12 is input to the subsampling circuit 1 for time-base sampling to reduce the number of pixels in the input data. The output from the subsampling circuit 1 is input to the discrete Fourier transform circuit 2 whereby a discrete Fourier transform is applied. The output from the discrete Fourier transform circuit 2 is then input to the memory 3 and to the divider 4. The memory 3 thus stores one screen of data.

As described above with reference to the prior art, if the input signal of the previous frame is expressed as f(x), the result of the corresponding Fourier transformation is expressed as $F(\omega)$, the input signal of the current frame is expressed as g(x), and the result of the corresponding Fourier transformation is expressed as $G(\omega)$. Thus, the output from the memory 3 is equivalent to the Fourier transformation result $F(\omega)$ from the previous frame, and the output of the discrete Fourier transform circuit 2 is equivalent to the Fourier transformation result $G(\omega)$ from the current frame. The output of the divider 4 is therefore $G(\omega)/F(\omega)$.

If the motion between the current frame and the previous frame is a simple parallel displacement of quantity a, the output of the inverse discrete Fourier transform circuit 5 takes the shape of a delta function in real space (equation 6) with a single peak at x = a. In reality, however, this peak is actually a curve with a certain width due to the effects of the image edge and calculating precision. If the previous frame and the current frame are the same, i.e., a still image, the output of the divider 4 is 1 for all $\omega$ values. Because the inverse discrete Fourier transformation of 1 is a delta function with the peak at the origin, the output of the inverse discrete Fourier transform circuit 5 at x = 0 (the origin) has a single peak.

The output of the inverse discrete Fourier transform circuit 5 is input to the first evaluation circuit 6. If there is a delta function peak at any single point in plane x, the distance and direction of that point from the origin expresses the amount of parallel displacement of the current frame from the previous frame.

It is to be noted that the high frequency component is reflected to the low frequency component by subsampling. By thus reflecting the high frequency component, the low frequency components and high frequency components are mixed together in the image data, and separation becomes impossible. This is not a problem, however, because the objective is not to reproduce the source image from this data but to determine the phase change from this data. When there is a uniform phase change in the input video signal across all frequency components, the phase change will be the same whether or not the high frequency component is reflected. As a result, reflecting the high frequency component by subsampling theoretically has no effect on motion vector detection in this method.

The case in which the displacement between the previous frame and the current frame is not simple parallel displacement, i.e., when a single object separates at one time in different directions, is considered next. To simplify the description, it is assumed that if the input video signal of the current frame is expressed as f(x), f(x) represents simultaneous parallel displacement in two directions identified by vectors a and b. As a result, displacement only on vector a can be expressed as f(x-a) and displacement only on vector b can be expressed as f(x-b), and the image signal g(x) in the next frame can be expressed as

$$g(x) = f(x-a) + f(x-b) \qquad [7]$$

The Fourier transform of f(x) is $F(\omega)$. When the discrete Fourier transform circuit 2 executes the discrete Fourier transform after subsampling according to this embodiment, the output $G(\omega)$ of the discrete Fourier transform circuit 2 is as shown in equation 8.

$$G(\omega) = \int \{f(x-a)+f(x-b)\} \cdot e^{-j\omega x}dx = (e^{-j\omega a}+e^{-j\omega b}) \cdot F(\omega) \qquad [8]$$

As a result, the output $G(\omega)/F(\omega)$ of the divider 4 is as shown in equation 9,

$$G(\omega)/F(\omega) = e^{-j\omega a} + e^{-j\omega b} \qquad [9]$$

and can be expressed as the sum of two exponential functions. If the output of the inverse discrete Fourier transform circuit 5 is expressed as e(x), e(x) is defined by equation 10 by an inverse Fourier transformation of equation 9.

$$e(x) = \int G(\omega)/F(\omega)e^{+j\omega x}d\omega = \delta(x-a)+\delta(x-b) \qquad [10]$$

This shows that a peak appears at the two points x=a and x=b in real space. The same conclusion can also be made when there is simultaneous displacement in two or more directions.

The next case to consider is simultaneous displacement in two directions by two objects in one screen. Parallel displacement of object 1 by vector a, and parallel displacement of object 2 by vector b in plane x are assumed. Object 1 is expressed by function f1(x), and object two is expressed by function f2(x). The mathematical model of function f(x) expressing the overall screen is

$$f(x) = f1(x) + f2(x) \qquad [11]$$

When the next frame is expressed as g(x), g(x) is defined as

$$g(x) = f1(x-a) + f2(x-b) \qquad [12]$$

assuming parallel displacement by only a and b. F($\omega$), which is the Fourier transform of f(x) according to this embodiment, will be defined by equation 13 if the Fourier transformation result of f1(x) is F1($\omega$) and the Fourier transformation result of f2(x) is F2($\omega$).

$$F(\omega) = \int\{f1(x)+f2(x)\}e^{-j\omega x}dx = F1(\omega)+F2(\omega) \qquad [13]$$

Similarly, the Fourier transform result G($\omega$) of the next frame g(x) is defined by equation 14.

$$G(\omega) = \int\{f1(x-a)+f2(x-b)\}e^{-j\omega x}dx = e^{-j\omega a}F1(\omega)+e^{-j\omega b}F2(\omega) \qquad [14]$$

As a result, the output G($\omega$)/F($\omega$) of the divider 4 will be as shown in equation 15 derived from equations 13 and 14.

$$G(\omega)/F(\omega) = \{e^{-j\omega a}F1(\omega)+e^{-j\omega b}F2(\omega)\}/\{F1(\omega)+F2(\omega)\} \qquad [15]$$

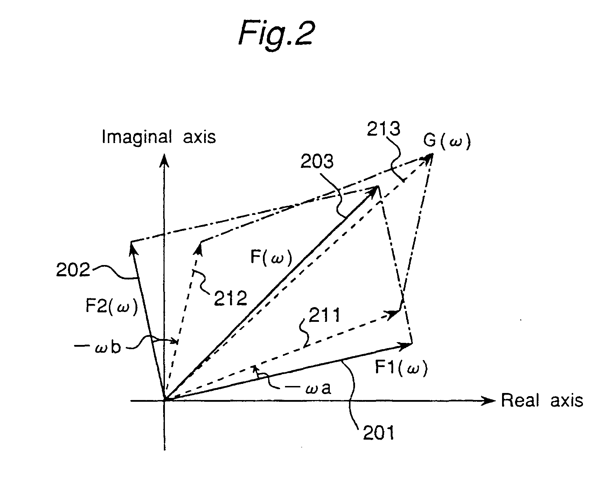

Fig. 2 is used to describe the meaning of equation 15 on a complex plane.

In Fig. 2, 201 represents F1($\omega$) projected to a complex plane divided into real and imaginary parts; 202 is a similar projection of F2($\omega$); 203 is F1($\omega$) + F2($\omega$), i.e., F($\omega$), and is the denominator of equation 15; 211 is F1($\omega$) with the phase rotated -$\omega$a and the absolute value held constant, and is equivalent to the first part of the numerator in equation 15; 212 is F2($\omega$) with the phase rotated -$\omega$b, and is equivalent to the second part of the numerator in equation 15; 213 is the sum of 211 and 212, and is equivalent to G($\omega$), i.e., the numerator of equation 15.

When phase components a and b are equal, the output from divider 4 will clearly be a simple exponential function as shown by equation 15, and the output of the inverse discrete Fourier transform circuit 5 will be a single peak. Because equal a and b phase components indicate displacement in the same direction, it is correct for a single peak to be output at this time. It is assumed here that a and b are approximately equal and not necessarily exactly equal. In this case the phase of the vector 213 expressing the numerator of equation 15 differs from the vector 203 representing the denominator, but the absolute values thereof are approximately equal. Because this is therefore not a simple exponential function, it is expected to have some effect on the inverse Fourier transform, but a delta function peak can be expected. In either case, it is clear that whether a peak results or not is dependent upon the similarity between a and b.

When a and b are completely different, the absolute values of F($\omega$) and G($\omega$) are not completely equal, as shown in Fig. 2. In other words, an absolute value component dependent upon $\omega$ is left in the division result, and the result of applying an inverse Fourier transform is not a delta function peak. Note that the shift of the G($\omega$) phase from F($\omega$) is the average of $\omega$a and $\omega$b, which represents neither a nor b, and it is therefore meaningless to obtain the phase difference between G($\omega$) and F($\omega$).

From the above discussion it is known that when there is no uniform displacement through the screen, parameter a representing the motion vector quantity can be known in subsampling interval units by the inverse discrete Fourier transform circuit 5 performing a discrete inverse Fourier transform. If motion vector quantity a is equivalent to a subsampling point, logically x = a and a delta function peak can be expected, but the sampling interval is coarser than the initially input video signal 12 due to subsampling, and motion vector quantity a will generally not be right on a sampling point. In this case the output of the inverse discrete Fourier transform circuit has plural peaks at the sampling points in the immediate proximity of the normal peak position. By thus obtaining the weighted average between the points based on the peak value of each point, the normal peak position, i.e., the precise amount of displacement, can be known. The first evaluation circuit 6 operates to calculate this precise amount of displacement using the output from the inverse discrete Fourier transform circuit 5.

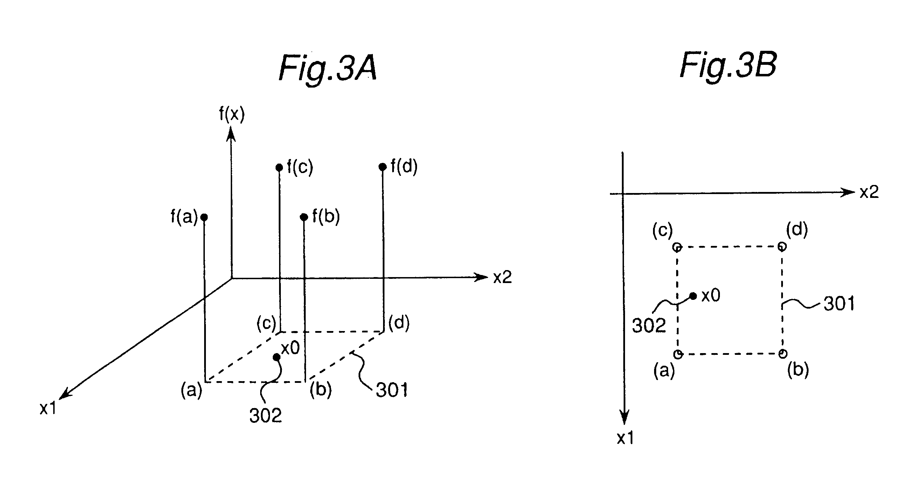

The method of calculating the weighted average is described below with reference to Figs. 3A and 3B. It is assumed that the output of the inverse discrete Fourier transform circuit 5 is a pattern as shown in Fig. 3A, while Fig. 3B is a view of Fig. 3A on the plane x = (x1, x2). Points a, b, c, and d are sampling points on the plane x = (x1, x2). The value at point a is f(a), and the values at points b, c, and d are, respectively, f(b), f(c), and f(d). Area 301 is defined by points a, b, c, and d. The peak is predicted to be in area 301, but the peak point is not on a sampling point. Point 302 is the point at x = x0, and is the normal peak position. This point x = x0 is calculated as follows using equation 16 where the value S in equation 16 is a normalized constant defined by equation 17.

$$x0 = \frac{1}{S}\{a{\bullet}f(a)+b{\bullet}f(b)+c{\bullet}f(c)+d{\bullet}f(d)\} \qquad\qquad [16]$$

$$S = f(a)+f(b)+f(c)+f(d) \qquad\qquad [17]$$

Applying equation 16, if all four points f(a), f(b), f(c), and f(d) have the same value, x0 will be at the center of the area defined by a, b, c, and d. Because the values at these four points are not normally equal, x0 will be obtained at a point closer to the greatest value.

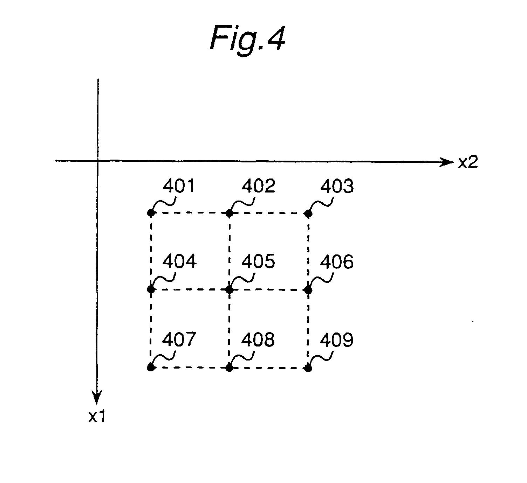

It is to be noted that weighted averaging is here applied to the four points around the position believed to be the peak, but an equivalent effect can be obtained using a number of points other than four. Fig. 4 shows another case in which weighted averaging is applied to nine sampling points 401 - 409. While equation 16 obtains the weighted average of four points to obtain x0, the same concept applied in equation 16 is used to calculate the weighted average of the nine points 401 - 409 and obtain x0. Note that the reliability of the result is increased by further increasing the number of points referenced in the calculation.

Another method whereby a function, such as a secondary function, with a peak is used in place of weighted averaging, the parameters are estimated using, for example, a least square method, and the position with a peak value is determined from these parameters can also be used. While the precision of this method is good, the calculation itself is complex, and if the form of the function used is an inappropriate model for the input video signal, the obtained values may not be reliable.

By thus applying a discrete Fourier transform after subsampling the input video signal, focusing on the image properties in the frequency area, dividing the previous frame and the current frame in the frequency area to obtain the motion vector as the change in the phase component, reflecting this value to the real area by an inverse discrete Fourier transformation, and detecting displacement in the obtained output, the motion vector quantity can be obtained structurally with fewer calculations.

(Embodiment 2)

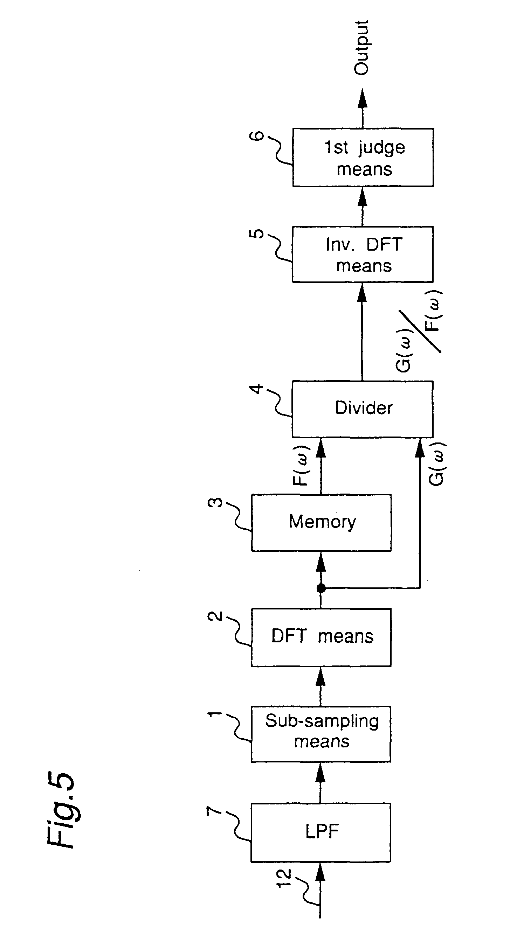

The second embodiment of the invention is described below. As shown in Fig. 5, a block diagram of a motion vector detection apparatus according to the second embodiment of the invention, this motion vector detection apparatus comprises a subsampling circuit 1, a discrete Fourier transform circuit 2, a memory 3 storing the output of the discrete Fourier transform circuit 2, a divider 4, an inverse discrete Fourier transform circuit 5, and a first evaluation circuit 6 for detecting motion vectors from the output of the inverse discrete Fourier transform circuit 5 as in the first embodiment above. This second embodiment differs from the first in the insertion of a low pass filter 7 before the subsampling circuit 1.

The operation of this motion vector detection apparatus is described below. When the input video signal 12 is input to the low pass filter 7, the high frequency component of the input video signal 12 is first removed by the low pass filter 7. The input signal, which has now been reduced to a low frequency component signal, is then input to the subsampling circuit 1. The low pass filter 7 operates to cut out the high frequency component so that there is no frequency reflection after subsampling in the next stage. Operation after the subsampling circuit 1 is the same as in the first embodiment above, and the end result is motion vector detection.

When displacement of the overall image moves by a uniformly equal phase quantity in the low and high frequency components, reflection theoretically has no effect. In real images, however, displacement in the low and high frequency components does not usually have a uniform change in the phase quantity. Because the high frequency component represents image detail, it is possible that the phase will not actually change equivalent to the direction of actual displacement. By thus providing the low pass filter 7 to prevent reflection, there will be no false results caused by reflecting the high frequency component on the low frequency component, and the motion vector quantity calculation will be more precise than that containing the high frequency component.

While the high frequency component of the image is lost by providing the low pass filter 7, the high frequency component is normally used to reproduce image detail, and is not as important as the low frequency component when the overall image is moving. In addition, eliminating the high frequency component poses no problem because the objective is not image reproduction.

By thus removing the high frequency component from the input video signal by circuits of a low pass filter before subsampling in this embodiment, motion vectors can be detected with greater accuracy in this embodiment than in the first embodiment.

(Embodiment 3)

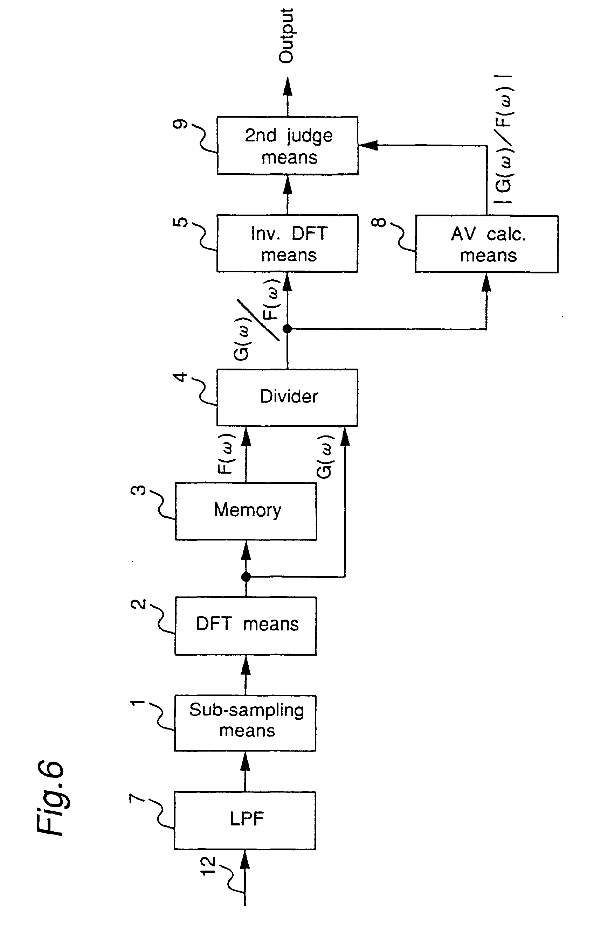

The third embodiment of the invention is described below. As shown in Fig. 6, a block diagram of a motion vector detection apparatus according to the third embodiment of the invention, this motion vector detection apparatus comprises a low pass filter 7, a subsampling circuit 1, a discrete Fourier transform circuit 2, a memory 3 storing the output of the discrete Fourier transform circuit 2, a divider 4, and an inverse discrete Fourier transform circuit 5 as in the second embodiment in Fig. 5 above. This third embodiment differs from the second in that the output of the divider 4 is input to an absolute value calculation circuit 8, and a second evaluation circuit 9 detecting the motion vectors from the outputs of the absolute value calculation circuit 8 and the inverse discrete Fourier transform circuit 5 is used in place of the first evaluation circuit.

The operation of this motion vector detection apparatus is described below. The input video signal 12 is input to the low pass filter 7, which passes only the low frequency component, and the subsampling circuit 1 then reduces the number of sampling points. The output of the subsampling circuit 1 is input to the discrete Fourier transform circuit 2, which converts the signal to frequency area data by a discrete Fourier transform operation. The memory 3 stores the output of the discrete Fourier transform circuit 2 temporarily and outputs the data from the previous input video frame. The divider 4 divides the output from the previous frame and the Fourier transform output of the current frame. Operation to this point is the same as in the second embodiment above. The output of the divider 4 is thus $G(\omega)/F(\omega)$.

The output of the divider 4 is converted by a discrete inverse Fourier transform operation by the inverse discrete Fourier transform circuit 5, and is also input to the absolute value calculation circuit 8.

The absolute value calculation circuit 8 obtains the absolute value of each $\omega$ value, i.e., calculates $|G(\omega)/F(\omega)|$, and outputs the value to the second evaluation circuit 9. If the displacement between the previous frame and the current frame of the input video signal is simple parallel displacement, the relationship between $G(\omega)$ and $F(\omega)$ is defined by equation 5, and the value of $|G(\omega)/F(\omega)|$ is 1 for all $\omega$. Therefore, when most output values of the absolute value calculation circuit 8 are 1 or nearly equal to 1, the image will not be a completely different image as, for example, in a scene change even when there is parallel displacement between the previous and current frames. In this case, it is meaningful to detect and output the motion vectors, and the second evaluation circuit 9 therefore outputs the motion vectors based on the output from the inverse discrete Fourier transform circuit 5. Conversely, when most of the output values from the absolute value calculation circuit 8 are not 1, it is meaningless to detect the motion vectors, and even if there is some peak in the output from the inverse discrete Fourier transform circuit 5, the second evaluation circuit 9 operates to not output the motion vector. The absolute value calculation circuit 8 counts the number of input division results within the range $1 +/- \varepsilon$ (where $\varepsilon$ is a positive value); when the total count exceeds a predetermined threshold value, $|G(\omega)/F(\omega)|$ is assumed to be 1 for most $\omega$, i.e., determines that it is meaningful to detect the motion vector, and outputs to the second evaluation circuit 9.

By circuits of this configuration, the third embodiment of the invention knows based on the output from the absolute value calculation circuit 8 whether there is actually a motion vector, and the second evaluation circuit 9 therefore operates to not output a wrong evaluation result for false peaks accidentally output by the inverse discrete Fourier transform circuit 5.

(Embodiment 4)

The absolute value calculation circuit 8 used in the third embodiment above uses the fact that

$$|F(\omega)| = |G(\omega)| \qquad [18]$$

when the input video signal is a still image or is parallel displaced in one direction. Therefore, it is possible to use a difference value calculation circuit in place of the absolute value calculation circuit 8 of the third embodiment, and to determine whether equation 18 is true based on the difference between the absolute value of the output of the memory 3 and the absolute value of the output of the discrete Fourier transform circuit 2. From equation 18,

$$|G(\omega)| - |F(\omega)| = 0 \qquad [19]$$

for all ω when the image is a still image or is moving in one direction. Therefore, if |G(ω)| - |F(ω)| is calculated by the difference calculation circuit and equation 19 is true for most ω, it is meaningful to calculate the motion vector.

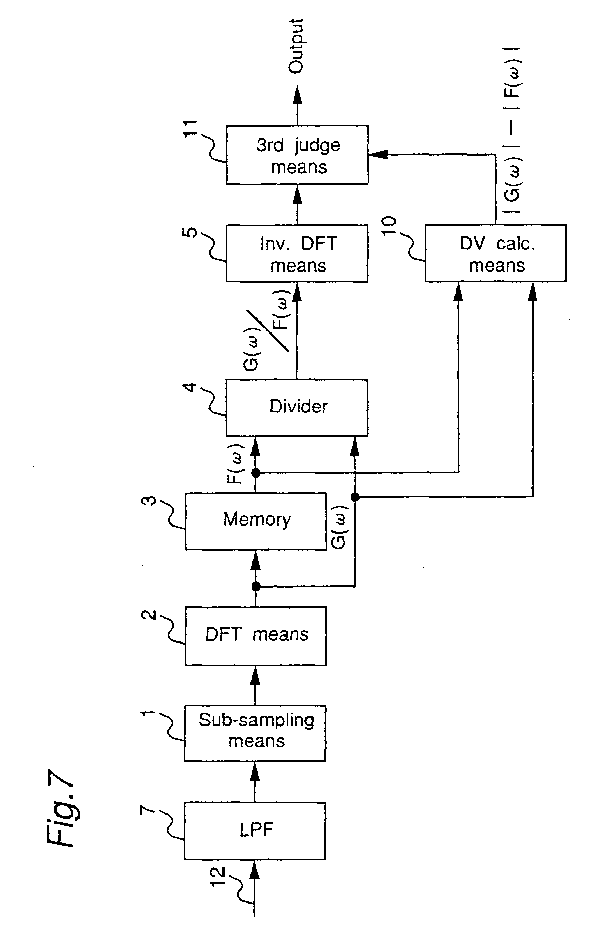

Fig. 7 is a block diagram of a motion vector detection apparatus in which a difference calculation circuit is used in place of the absolute value calculation circuit 8 of the third embodiment. As shown in Fig. 7, this motion vector detection apparatus comprises a low pass filter 7, a subsampling circuit 1, a discrete Fourier transform circuit 2, a memory 3 storing the output of the discrete Fourier transform circuit 2, a divider 4, and an inverse discrete Fourier transform circuit 5 as in the third embodiment in Fig. 6 above.

This embodiment differs from the third embodiment in that the absolute value calculation circuit 8 is replaced by a difference calculation circuit 10, which takes inputs from the memory 3 and the discrete Fourier transform circuit 2, and a third evaluation circuit 11 is used in place of the second evaluation circuit 9. This third evaluation circuit 11 operates on the outputs from the inverse discrete Fourier transform circuit 5 and the difference calculation circuit 10.

The operation of this motion vector detection apparatus is described below. The input video signal 12 is input to the low pass filter 7 for bandwidth limiting to prevent reflection at the next subsampling stage. The bandwidth limited data is input to the subsampling circuit for subsampling, and the discrete Fourier transform of the current frame and the discrete Fourier transform of the previous frame are divided by the divider 4 as in the second embodiment.

The difference calculation circuit 10 obtains the absolute values of the temporarily stored output of the memory 3 and the output of the discrete Fourier transform circuit 2, and then obtains the difference of the absolute values. Specifically, the output of the difference calculation circuit 10 expresses the value $|\{|G(\omega)| - |F(\omega)|\}|$. The third evaluation circuit 11 adds the outputs of the difference calculation circuit 10 for all ω. When the result is less than a predetermined threshold value, $|G(\omega)|$ and $|F(\omega)|$ are approximately equal, i.e., it is meaningful to detect the motion vector. The output of the inverse discrete Fourier transform circuit 5 is therefore referenced, and when there is a clear peak, the point of the point is determined to represent the motion vector between the previous frame and the current frame. If, however, the result of adding the outputs of the difference calculation circuit 10 for all ω is greater than the threshold value, the third evaluation circuit 11 outputs that there is no motion vector even if there is some peak in the output of the inverse discrete Fourier transform circuit 5.

Even when the output of the difference calculation circuit 10 is used as the input to the third evaluation circuit 11, the same effect can be obtained as with the configuration of the third embodiment shown in Fig. 6. In this fourth embodiment, the screen information can be obtained and the motion vector detected by performing a difference calculation instead of the absolute value calculation of the third embodiment, and integrating the difference values for ω. In the third embodiment it is determined whether $|G(\omega) / F(\omega)|$ is approximately 1 for all ω, the number of quotients that are approximately 1 is counted, and if this number exceeds a predetermined threshold value the absolute value calculation circuit 8 outputs information that $|G(\omega) / F(\omega)|$ is approximately 1 for all ω, i.e., that it is meaningful to detect the motion vector. Therefore, if the quotient is not within the threshold value of 1 during evaluation of a given ω, this number is not counted even when the quotient is offset only slightly from the threshold value in the third embodiment. In the fourth embodiment, the adverse effects of the third embodiment caused by a value coincidentally exceeding the threshold value or coincidentally less than the threshold value are avoided because the difference calculation results are integrated one at a time.

It is to be noted that in each of the embodiments above one complete screen is used as the input video signal 12, and processing is applied to one complete image screen, but the effects described above can also be obtained when the screen is divided into image blocks and processing is applied separately to these blocks.

The invention being thus described, it will be obvious that the same may be varied in many ways. All such modifications as would be obvious to one skilled in the art are intended to be included within the scope of the following claims.

**Claims**

**1.** A motion vector detection apparatus comprising

    a subsampling means (1) for time-base sampling an input video signal,
    a discrete Fourier transform means (2) for Fourier transforming subsampled data,
    a storage means (3) for temporarily storing Fourier transformed data,
    a divider (4) for dividing the data Fourier transformed by the discrete Fourier transform means and the data temporarily stored by the storage means,
    an inverse discrete Fourier transform means (5) for inverse Fourier transforming the divider output (G(ω)/F(ω)),
    a first evaluation means (6) for detecting a motion vector from the output of the inverse discrete Fourier transform means,
    an absolute value calculation means (8) for calculating an absolute value of the divider output (G(ω)/F(ω)), and

a second evaluation means (9) for detecting a motion vector from an output of the absolute value calculation means and an output of the inverse discrete Fourier transform means (5).

2. The motion vector detection apparatus according to claim 1,
characterized by a low frequency pass means (7) for passing only low frequency components of an input video signal (12) and blocking the high frequency component, wherein the input video signal (12) is input to the low frequency pass means (7) before being input to the subsampling means (1), and the output of the low frequency pass means (7) is input to the subsampling means (1).

3. The motion vector detection apparatus according to claim 1 or 2,
characterized by a difference calculation means (10) for calculating the difference of the storage means (3) output and the discrete Fourier transform means (2) output, and
a third evaluation means (11) for detecting a motion vector from an output of the difference calculation means (10) and an output of the inverse discrete Fourier transform means (5).

**Patentansprüche**

1. Bewegungsvektordetektionsvorrichtung mit:

einem Unterabtastungsmittel (1) zum zeitbasierten Abtasten eines Eingangsvideosignales,
ein Mittel (2) für diskrete Fourier-Transformation zum Fourier-Transformieren von unterabgetasteten Daten,
ein Speichermittel (3) zum zeitweiligen Speichern von Fourier-transformierten Daten,
einen Dividierer (4) zum Dividieren der von dem Mittel für diskrete Fourier-Transformation Fourier-transformierten Daten und der von dem Speichermittel zeitweilig gespeicherten Daten,
ein Mittel (5) für inverse diskrete Fourier-Transformation zum inversen Fourier-Transformieren der Dividiererausgabe ($G(\omega)/F(\omega)$),
ein erstes Evaluierungsmittel (6) zum Detektieren eines Bewegungsvektors von der Ausgabe des Mittels für inverse diskrete Fourier-Transformation,
ein Mittel (8) für Absolutwertberechnung zum Berechnen eines Absolutwertes der Dividiererausgabe ($G(\omega)/F(\omega)$)) und
ein zweites Evaluierungsmittel (9) zum Detektieren eines Bewegungsvektors von einer Ausgabe des Mittels für Absolutwertberechnung und einer Ausgabe des Mittels (5) für inverse diskrete Fourier-Transformation.

2. Bewegungsvektordetektionsvorrichtung gemäß Anspruch 1,
dadurch gekennzeichnet, dass ein Niederfrequenzpassmittel (7) zum Durchlassen von nur Niederfrequenzkomponenten eines Eingangsvideosignales (12) und zum Sperren der Hochfrequenzkomponenten, wobei das Eingangsvideosignal (12) dem Niederfrequenzpassmittel (7) eingegeben wird, bevor esdem Unterabtastungsmittel (1) eingegeben wird, und wobei die Ausgabe des Niederfrequenzpassmittels (7) dem Unterabtastungsmittel (1) eingegeben wird.

3. Bewegungsvektordetektionsvorrichtung gemäß Anspruch 1 oder 2,
gekennzeichnet durch ein Mittel (10) für Differenzberechnung zum Berechnen der Differenz der Ausgabe des Speichermittels (3) und der Ausgabe des Mittels (2) für diskrete Fourier-Transformation und
ein drittes Evaluierungsmittel (11) zum Detektieren eines Bewegungsvektors von einer Ausgabe des Mittels (10) für Differenzberechnung und einer Ausgabe des Mittels (5) für inverse diskrete Fourier-Transformation.

**Revendications**

1. Dispositif de détection de vecteur de mouvement comprenant

un moyen de sous-échantillonnage (1) destiné à un échantillonnage sur une base de temps d'un signal vidéo d'entrée,
un moyen de transformation de Fourier discrète (2) destiné à effectuer une transformation de Fourier de données sous-échantillonnées,
un moyen de mémorisation (3) destiné à mémoriser temporairement les données transformées par une transformation de Fourier,

un diviseur (4) destiné à diviser les données transformées par une transformation de Fourier par le moyen de transformation de Fourier discrète et les données mémorisées temporairement par le moyen de mémorisation, un moyen de transformation de Fourier discrète inverse (5) destiné à transformer par une transformation de Fourier inverse la sortie du diviseur (G($\omega$)/F($\omega$)),

un premier moyen d'évaluation (6) destiné à détecter un vecteur de mouvement à partir de la sortie du moyen de transformation de Fourier discrète inverse,

un moyen de calcul de valeur absolue (8) destiné à calculer une valeur absolue de la sortie du diviseur (G($\omega$)/F($\omega$)), et

un second moyen d'évaluation (9) destiné à détecter un vecteur de mouvement à partir d'une sortie du moyen de calcul de valeur absolue et d'une sortie du moyen de transformation de Fourier discrète inverse (5).

2. Dispositif de détection de vecteur de mouvement selon la revendication 1,

caractérisé par un moyen transmettant les basses fréquences (7) destiné à ne laisser passer que les composantes à basse fréquence d'un signal vidéo d'entrée (12) et à bloquer les composantes à haute fréquence, dans lequel le signal vidéo d'entrée (12) est appliqué en entrée au moyen transmettant les basses fréquences (7) avant d'être appliqué en entrée au moyen de sous-échantillonnage (1) et la sortie du moyen transmettant les basses fréquences (7) est appliquée en entrée au moyen de sous-échantillonnage (1).

3. Dispositif de détection de vecteur de mouvement selon la revendication 1 ou 2,

caractérisé par un moyen de calcul de différence (10) destiné à calculer la différence de la sortie du moyen de mémorisation (3) et de la sortie du moyen de transformation de Fourier discrète (2), et

un troisième moyen d'évaluation (11) destiné à détecter un vecteur de mouvement à partir d'une sortie du moyen de calcul de différence (10) et d'une sortie du moyen de transformation de Fourier discrète inverse (5).

*Fig.1*

Input image signal 12 → Sub-sampling means (1) → DFT means (2) → Memory (3), Divider (4) → Inv. DFT means (5) → 1st judge means (6) → Output

$F(\omega)$, $G(\omega)$, $\dfrac{G(\omega)}{F(\omega)}$

12

# Fig.2

# Fig.3A

# Fig.3B

EP 0 627 696 B1

# Fig.4

Fig.5

*Fig.6*

## Fig.7

EP 0 627 696 B1

# Fig.8 PRIOR ART

# Fig.9 PRIOR ART